(19) Europäisches Patentamt
European Patent Office
Office européen des brevets

(11) **EP 4 471 933 A1**

(12) **EUROPEAN PATENT APPLICATION**
published in accordance with Art. 153(4) EPC

(43) Date of publication:
**04.12.2024 Bulletin 2024/49**

(21) Application number: **23746536.4**

(22) Date of filing: **24.01.2023**

(51) International Patent Classification (IPC):
*H01M 10/48* (2006.01)   *H01M 50/204* (2021.01)
*H01M 50/507* (2021.01)   *H01M 50/522* (2021.01)
*H01M 50/569* (2021.01)   *H02J 7/04* (2006.01)
*H02J 7/10* (2006.01)

(52) Cooperative Patent Classification (CPC):
**H01M 10/48; H01M 50/204; H01M 50/507;
H01M 50/522; H01M 50/569; H02J 7/04;
H02J 7/06; Y02E 60/10**

(86) International application number:
**PCT/IB2023/000015**

(87) International publication number:
**WO 2023/144623 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2022 JP 2022011013**

(71) Applicants:
• **NISSAN MOTOR CO., LTD.
Kanagawa 221-0023 (JP)**

• **Renault s.a.s
92100 Boulogne Billancourt (FR)**

(72) Inventors:
• **SAKAI, Masanobu
Atsugi-shi, Kanagawa 243-0123 (JP)**
• **IKEDA, Nobuhisa
Atsugi-shi, Kanagawa 243-0123 (JP)**

(74) Representative: **Grünecker Patent- und
Rechtsanwälte
PartG mbB
Leopoldstraße 4
80802 München (DE)**

(54) **BATTERY MODULE AND CHARGE/DISCHARGE CONTROL DEVICE**

(57)    A battery module 1A includes a battery cell 10, a plurality of temperature detection units 41 and 42, and a cell state monitoring circuit 50. The temperature detection unit 41 is provided at a first installation point on the tab 11 or 13 or on the bus bar 20, and the temperature detection unit 42 is provided at a second installation point on the outer surface of the battery cell 10. The second installation point is located at the position farthest from the tab 11 or 13 on the outer surface of the battery cell 10. The cell state monitoring circuit 50 calculates the temperature of the battery cell 10 based on the outputs of the plurality of temperature detection units 41 and 42.

EP 4 471 933 A1

FIG.1

CONTROLLER(100)

(a)

(b)

**Description**

Technical Field

The present invention relates to a battery module and a charging/discharging control device.

The present application claims priority based on Japanese Patent Application No. 2022-011013 filed on January 27, 2022, and for designated states where incorporation by reference of literature is permitted, the contents of the above application are incorporated by reference into the present application and made a part of the description of the present application.

Background Art

There have been conventionally known battery temperature measurement devices that measure the temperature of a secondary battery using a temperature sensor mounted on an integrated circuit board (for example, Patent Document 1). In the battery temperature measurement device described in Patent Document 1, the temperature sensor is fixed by welding to a lead connector soldered onto an integrated circuit board.

Prior Art Document

Patent Document

Patent Document 1: Japanese Unexamined Patent Application Publication No. 2020-534653

Summary of Invention

Problems to Be Solved by Invention

Secondary batteries for electric vehicles have a thick cell and a large heat capacity in order to increase the capacitance, for example. On the other hand, the tabs and bus bars are smaller in heat capacity than the secondary battery. Therefore, when a charging/discharging current flows through the secondary battery, the difference between the internal temperature of the cell and the temperature of the tabs or bus bars increases. In the above-mentioned battery temperature measurement device, since the battery temperature is measured using only the temperature sensor fixed to the lead connector, there is a problem that the measured temperature may deviate greatly from the actual internal temperature of the cell.

The problem to be solved by the present invention is to provide a battery module that can calculate the internal temperature of a battery cell by a value close to the actual temperature.

Means for Solving Problems

The present invention solves the above problem by providing one of a plurality of temperature detection units on a tab and/or a bus bar, providing one of the plurality of temperature detection units at a first installation point on the tab or the bus bar, and providing the other of the plurality of temperature detection units at a second installation point on an outer surface of a battery cell, in which the second installation point is located at a position farthest from the tab on the outer surface of the cell, and a cell state monitoring circuit calculates a temperature of the battery cell based on outputs of the plurality of temperature detection units.

Effects of Invention

According to the present invention, it is possible to calculate the internal temperature of the battery cell by a value close to the actual temperature.

Brief Description of Drawings

FIG. 1(a) is a perspective view of an example of a battery module in a first embodiment, and FIG. 1(b) is a conceptual diagram of a charging control device including the battery module.

FIGS. 2(a) and 2(b) are plan views of the battery module according to the present embodiment, and graphs for describing the temperature distribution of the battery module.

FIG. 3(a) is a schematic diagram showing tab pull-out parts of a battery cell and a part of a cell state monitoring circuit, and FIG. 3(b) is a schematic diagram showing a temperature detection unit and a part of the cell state monitoring circuit.

FIG. 4 is a schematic diagram showing a tab pull-out part of a battery cell and a part of a cell state monitoring circuit in a battery module according to a modified example of the present embodiment.

FIGS. 5(a) and 5(b) are plan views of a battery module according to a modified example of the present embodiment, and graphs for describing the temperature distribution of the battery module.

Modes for Carrying Out the Invention

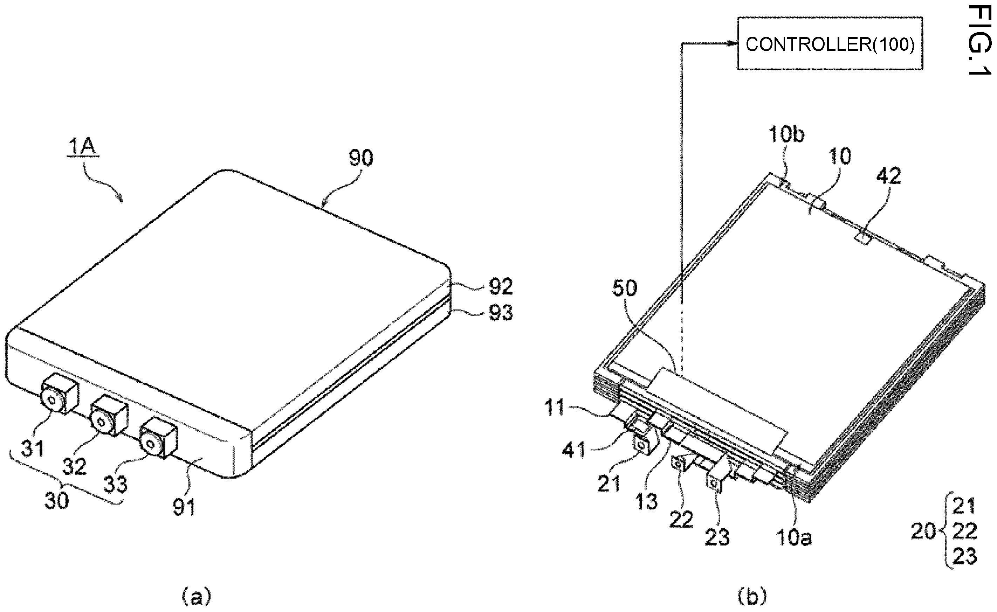

Embodiments of a battery module according to the present invention will be described with reference to the drawings. FIG. 1(a) is a perspective view of an example of the battery module according to the present embodiment, and FIG. 1(b) is a conceptual diagram of a charging control device including the battery module shown in FIG. 1(a) from which an output terminal 30 and a module cover 90 are removed.

As shown in FIGS. 1(a) and 1(b), a battery module 1A includes a plurality of battery cells 10, a bus bar 20, temperature detection units 41 and 42, a cell state monitoring circuit 50, and a module cover 90. The components included in the battery module 1A have not only the bus bar 20 and the like but also support members and the like.

The plurality of battery cells 10 have at least pluralities of electrode layers and tabs, and is connected to a plurality of output terminals 30. The plurality of battery cells 10 are stacked on one another with a plurality of spacers and support members in between. Each one of the battery cells 10 is a lithium-ion secondary battery, for example. In the present embodiment, a flat laminate film lithium-ion secondary battery is exemplified as the battery cell 10. The battery cell 10 has a power generation element in which electrode layers (positive electrode layer and negative electrode layer) and a separator are laminated and filled with an electrolyte solution, a positive electrode tab 11 connected to the positive electrode layer, a negative electrode tab 13 connected to the negative electrode layer, and an exterior member that houses and seals these components. Although description of the materials contained in the lithium-ion secondary battery and the detailed battery structure will be omitted, known battery materials and structures can be applied to the lithium-ion secondary battery. In the following description, the embodiment will be described on the assumption that the battery cell 10 is a secondary battery containing an electrolyte solution, but the battery cell 10 may be an all-solid-state lithium-ion battery.

The positive and negative electrode tabs 11 and 13 of the battery cell 10 are formed of a plate-like metal member (for example, copper-nickel plating). These positive and negative electrode tabs 11 and 13 extend from the same side of the exterior member of the battery cell 10 so as to be adjacent to each other. As shown in FIG. 1(b), these positive and negative electrode tabs 11 and 13 are connected to the bus bar 20. The bus bar 20 is formed of a plate-like metal member. The bus bar 20 electrically connects the plurality of battery cells, and also electrically connects the battery cell 10 to the output terminal 30 (positive electrode terminal 31, intermediate terminal 32, and negative electrode terminal 33).

As shown in FIG. 1(b), the bus bar 20 includes a positive electrode bus bar 21, an intermediate bus bar 22, and a negative electrode bus bar 23. The bus bar 20 is formed of a plate-like metal member (for example, copper). One end of the positive electrode bus bar 21 is connected to the positive electrode tab 11 of the battery cell 10, while the other end of the positive electrode bus bar 21 is connected to the positive electrode terminal 31 of the output terminal 30. One end of the intermediate bus bar 22 is connected to the negative electrode tab 13 of the battery cell 10, while the other end of the intermediate bus bar 22 is connected to the positive electrode tab 11 of another battery cell 10. The central part of the intermediate bus bar 22 is connected to the intermediate terminal 32. One end of the negative electrode bus bar 23 is connected to the negative electrode tab 13 of the battery cell 10, while the other end of the negative electrode bus bar 23 is connected to the negative electrode terminal 33. The positive and negative electrode tabs 11 and 13 and the bus bar 20 are bonded to each other by ultrasonic bonding or the like, for example. The bus bar 20 and the output terminal 30 are connected to each other by aligning screw holes provided in the bus bar 20 and the output terminal 30 and tightening bolts, for example.

The temperature detection units 41 and 42 are sensors that detect the temperature of the battery cell 10. For example, resistance change-type sensors such as thermistors are used for the temperature detection units 41 and 42. That is, the temperature detection units 41 and 42 have sensors with properties in which an electrical resistance varies according to the temperature of the battery cell 10. The temperature detection unit 41 is provided on the tab 11 or 13 or the bus bar 20. The temperature detection unit 42 is provided on an opposite side 10b that is opposite to a side 10a that is closest to the installation point of the temperature detection unit 41 among the sides surrounding the outer surface of the battery cell 10, or is provided in the vicinity of the opposite side 10b. If the temperature detection unit 41 is installed on the tab 11 or 13, the installation point of the temperature detection unit 41 (equivalent to a "first installation point" of the present invention) is a point on the tab 11 or 13, and if the temperature detection unit 41 is installed on the bus bar 20, the installation point of the temperature detection unit 41 is a point on the bus bar 20. The installation point of the temperature detection unit 42 (equivalent to a "second installation point" of the present invention) is a point on the cell outer surface of the temperature detection unit 42, and is located at the position farthest from the tab on the cell outer surface. The method for mounting the temperature detection units 41 and 42 on the bus bar 20 or the tab 11 or 13 may be adhering temperature sensors with lead wires, or may be forming signal lines on a cell laminator using a printed circuit board manufacturing method and connecting the same with solder or a conductive adhesive before cell assembly.

As shown in FIG. 1(b), in the flat battery cell 10, the outer surface of the battery cell 10 is rectangular. Of the four sides (two short sides and two long sides) on the outer periphery of the rectangle, the side (short side) located on the pull-out side of the tabs 11 and 13 is the side closest to the installation point of the temperature detection unit 41. The temperature detection unit 42 is provided on the opposite side 10b (short side) that is opposite to the side 10a (short side) closest to the installation point of the temperature detection unit 41, or is provided in the vicinity of the opposite side 10b.

The cell state monitoring circuit 50 is provided on the cell outer surface (the surface of the exterior member) of the battery 10, in a state of being mounted on the substrate. The cell state monitoring circuit 50 has a function of monitoring the state of the battery cell 10. In the present embodiment, the cell state monitoring circuit 50 manages the temperature of the battery cell 10 by calculating the temperature of the battery cell 10 based on the outputs of the plurality of temperature detection units 41 and 42. The cell state monitoring circuit 50 also has a function of monitoring the deterioration state (SOH) of the battery cell 10. The cell state monitoring circuit 50 is connected to the plurality of temperature detection units 41 and 42 via signal lines, and receives temperature data detected by the temperature detection units 41 and 42.

The cell state monitoring circuit 50 also monitors the deterioration state (SOH) of the battery cell 10. As a method for monitoring the deterioration state (SOH), the electrochemical impedance spectroscopy (EIS) method is used as an example. In the EIS method, the internal resistance of the battery cell 10 is calculated based on the response voltage from the battery cell 10 and the current flowing through the battery cell 10 when an AC signal of a predetermined frequency is applied to the battery module 1A from the output terminal 30 by an external power source. Then, deterioration diagnosis is performed based on the data of the internal resistance. For example, the state of the battery cell can be diagnosed with reference to the calibration characteristics of the deterioration state (SOH) and internal resistance (HFR) defined in advance.

A controller 100 is connected to the cell state monitoring circuit 50 via a signal line, and controls the charging/discharging of the battery cell 10 according to the state of the battery cell managed by the cell state monitoring circuit 50. During charging control of the battery cell 10, the controller 100 receives a signal indicating the state of the battery cell 10 from the cell state monitoring circuit 50, and controls the charging circuit so that the state of charge (SOC) of the battery cell 10 reaches a target SOC.

The controller 100 controls charging of the battery cell 10 based on the temperature calculated by the cell state monitoring circuit 50. For example, the upper limit temperature of the battery module during charging is preset in the controller 100, and when the temperature calculated by the cell state monitoring circuit 50 reaches the upper limit temperature during charging, the controller 100 stops charging of the battery cell 10 or lowers the charging current.

As shown in FIG. 1(a), the module cover 90 includes a front cover 91, an upper cover 92, and a lower cover 93. The front cover 91 covers the battery cell 10 from the front side so as to expose the output terminal 30 to the outside. The upper cover 92 and the lower cover 93 cover the battery cells from the main surfaces 10a and 10b (upper and lower surfaces in the present embodiment), and have parallel surfaces that are substantially parallel to the main surfaces 10a and 10b of the battery cells.

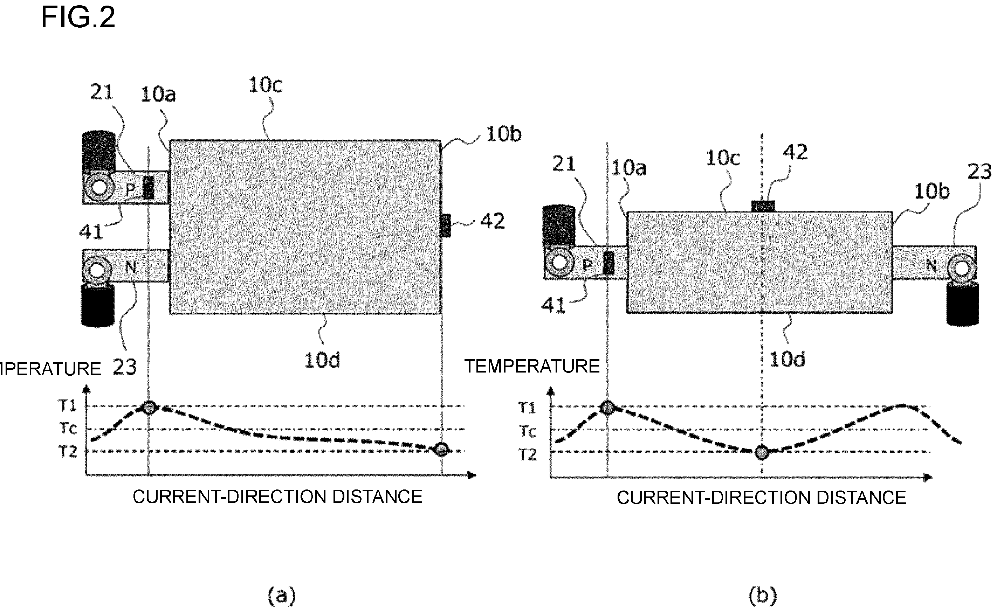

Next, the relationship between the temperature distribution of the battery cell 10 and the installation points of the plurality of temperature detection units 41 and 42 will be described with reference to FIG. 2. FIG. 2(a) is a plan view of the battery module 1A according to the present embodiment and a graph for describing the temperature distribution of the battery module 1A. The lower part of FIG. 2(a) is a characteristic graph of the temperature distribution where the vertical axis indicates the temperature and the horizontal axis indicates the distance in the direction of current conduction (current-direction distance). The current-direction distance is a distance from the connection point between the positive electrode bus bar 21 and the positive electrode terminal 31 in the extending direction of the positive electrode bus bar 21 and in a direction along the lamination plane of the electrode layers included in the battery cell 10 (the plane along the page of FIG. 2). FIG. 2(b) is a plan view of a battery module 1A according to a modified example of the present embodiment and a graph for describing the temperature distribution of the battery module 1A. In each of the plan views of FIG. 2, the battery module 1A is illustrated with the module cover 90 removed.

As shown in FIG. 2(a), the temperature detection unit 41 is installed on the positive electrode bus bar 21. The temperature detection unit 42 is installed on the outer surface of the battery cell 10 near the middle of the short side 10b. When the battery cell 10 is charged or discharged, the charging/discharging current is concentrated near the tabs, so that Joule heat is generated due to the resistance of the tabs 11 and 13 or the bus bars 21 and 23. The temperature near the tabs is higher than the internal temperature of the battery cell 10. On the other hand, the end of the battery cell 10 located on the opposite side of the tabs 11 and 13 (the end on the opposite side 10b) has no concentration of the charging/discharging current, so that the temperature is equal to or slightly lower than the internal temperature of the battery cell 10. The temperature distribution of the battery cell 10 has a property in which the temperature near the tabs 11 and 13 (near-tab temperature) is the highest, the internal temperature of the battery cell 10 is next highest, and the temperature at the cell end on the opposite side 10b (cell-end temperature) is the lowest (near-tab temperature > internal temperature > cell-end temperature).

That is, as shown in the graph of FIG. 2(a), the temperature gradient is such that the temperature ($T_1$) at the installation point of the temperature detection unit 41 located near the tab 11 is the highest, the temperature decreases as the current-direction distance increases, and the temperature ($T_2$) at the installation point of the temperature detection unit 42 located at the cell end on the opposite side 10b is the lowest. Thus, in the present embodiment, the installation point of the temperature detection unit 42 is located at the position farthest from the tab. In other words, the installation point of the temperature detection unit 42 is located at the position, such that, in the temperature gradient of the battery cell 10 in the direction along the lamination plane of the plurality of electrode layers, when the temperature at the installation point of the temperature detection unit 41 is the highest, the temperature at the installation point of the temperature detection unit 42 is the lowest. Although the temperature distribution of the battery cell 10 varies depending on the external environmental temperature, the deterioration state inside the battery, and the like, the temperature detection units 41 and 42 are installed such that, in the temperature distribution of the battery cell 10 when a charging/discharging current is flown through the battery cell 10 in a normal use state at the time of shipment of the battery cell 10, when the temperature at the installation point of the temperature detection unit 41 is the highest, the temperature at the installation point of the temperature detection unit 42 is the lowest.

As shown in FIG. 2(b), in the modified example of the present embodiment, tabs 11 and 13 are provided separately at both ends of a battery cell 10. A temperature detection unit 41 is installed on a positive electrode bus bar 21. A temperature detection unit 42 is installed on the outer surface of the battery cell 10 near the center of a long side 10c. In this type, since a charging/discharging current flows through the tabs 11 and 13 located at both ends of the battery cell 10, the temperature near the tabs 11 and 13 becomes higher than the internal temperature of the battery cell 10. On the other hand, since there is no concentration of the charging/discharging current at the center of the side surface of the battery cell 10 (the center of the long side 10c), the temperature is equal to or slightly lower than the internal temperature of the battery cell 10. The temperature distribution of the battery cell 10 has a property in which the temperature near the tabs 11 and 13 (both-end tab temperature) is the highest, and the temperature at the center of inside of the battery cell 10 (internal temperature) is the lowest (both-end tab temperature > internal temperature). That is, as shown in the graph of FIG. 2(b), the temperature gradient is such that the temperature ($T_1$) at the installation point of the temperature detection unit 41 located near the tabs 11 and 13 is the highest, the temperature becomes lower with increasing proximity to the inside of the battery cell 10, and the temperature ($T_2$) at the installation point of the temperature detection unit 42 located near the center of the long side 10c is the lowest. As described above, in the present embodiment, the temperature detection unit 42 is installed in the battery cell 10 such that, in the temperature gradient of the battery cell 10 in the direction along the lamination plane of the plurality of electrode layers, when the temperature at the installation point of the temperature detection unit 41 is the highest, the temperature at the installation point of the temperature detection unit 42 is the lowest. In the examples of FIG. 2(a) and (b), the temperature detection unit 41 may be provided on the negative electrode bus bar 23, or may be provided on the intermediate bus bar 22 (see FIG. 1(b)). In the modified example shown in FIG. 2(b), the temperature detection unit 42 may be provided near the center of a long side 10d opposite to the long side 10c. Furthermore, the number of temperature detection units 41 and 42 is not limited to two, and may be three or more. For example, in the example of FIG. 2(a), a third temperature detection unit may be provided at the end of the long side 10c or the long side 10d, and in the example of FIG. 2(b), a third temperature detection unit may be provided at the end of the long side 10d.

The cell state monitoring circuit 50 calculates the average value of the temperatures detected by the temperature detection units 41 and 42 as the temperature of the battery cell 10. In the case of a temperature distribution as shown in the graph of FIG. 2(a), when the temperature detection unit 41 is provided near the tab 11 and the temperature detection unit 42 is provided at the cell end on the opposite side 10b, the interpolation of the detection temperatures (temperature values) obtained from the temperature detection units 41 and 42 can take a value close to the internal temperature of the battery cell 10. The position of the interpolation varies depending on the shape and heat dissipation characteristics of the cell. In the type in which the positive and negative electrode tabs 11 and 13 are pulled out from one end of the battery cell 10 as shown in FIG. 2(a), the temperature around the tabs 11 and 13 generally tends to be high. Therefore, a simple average value (linear approximation) of the temperatures detected by the temperature detection units 41 and 42 may result in a value higher than the average internal temperature of the battery cell 10. However, if the purpose is to control charging/discharging of the battery, for example, the difference between the calculated temperature and the actual temperature can be regarded as a margin. Accordingly, in the present embodiment, the cell state monitoring circuit 50 can calculate a practical temperature of the battery cell 10 by taking the average value of the temperatures detected by the temperature detection units 41 and 42.

In the type in which the positive and negative electrode tabs 11 and 13 are pulled out from one end of the battery cell 10 as shown in FIG. 2(a), the temperature gradient of the internal temperature of the battery cell 10 tends to exhibit a rapid increase around the tabs. The temperature gradient characteristics also change depending on the elapsed time (duration of use of the battery). The tendency of the temperature gradient characteristics can be modeled in conjunction with the charging/discharging current. However, since the cell characteristics are designed to avoid temperature gradients as much as possible, taking the average value of the temperatures detected by the temperature detection units 41 and 42 as the representative internal temperature of the cell enables simple and practical temperature tracing.

As shown in FIG. 2(b), in the type in which the positive electrode tab 11 and the negative electrode tab 13 are pulled out from the both ends of the battery cell 10, in general, the temperature around the tabs 11 and 13 is high, and the temperature in the center of the battery cell 10 is low. Therefore, when the temperature detection unit 41 is provided near the tabs 11 and 13 and the temperature detection unit 42 is provided at an intermediate position between the position of the positive electrode tab 11 and the position of the negative electrode tab 13, the interpolation of the detection temperatures obtained from the temperature detection units 41 and 42 takes a value close to the internal temperature of the battery cell 10. The position of the interpolation varies depending on the shape and heat dissipation characteristics of the battery cell 10. However, since the temperature around the tabs 11 and 13 generally tends to be intensively high, the intermediate value (average) of the temperatures detected by the temperature detection units 41 and 42 may be taken as a practical means. In addition, if the tendency of the temperatures detected by the temperature detection units 41 and 42 can be experimentally obtained in advance, the weight of the interpolation may be statistically calculated and applied to the intermediate value of the temperatures detected by the temperature detection units 41 and 42, thereby to calculate the final temperature of the battery cell 10. The formula for calculating the temperature of the battery cell 10 by the cell state monitoring circuit 50 is shown as the following formula (1):
[Math 1]

$$ \mathrm{T}c = (\mathrm{T}_1 + \mathrm{T}_2) \diagup \mathrm{W} \qquad (1) $$

where Tc indicates the temperature of the battery cell 10, $T_1$ indicates the detection temperature of the temperature detection unit 41, $T_2$ indicates the detection temperature of the temperature detection unit 42, and W indicates weight. For example, in the case of calculation with the average value as the temperature of the battery cell 10, W is equal to 2, and in the case of applying the weight (design value), W may be equal to 1.4, for example.

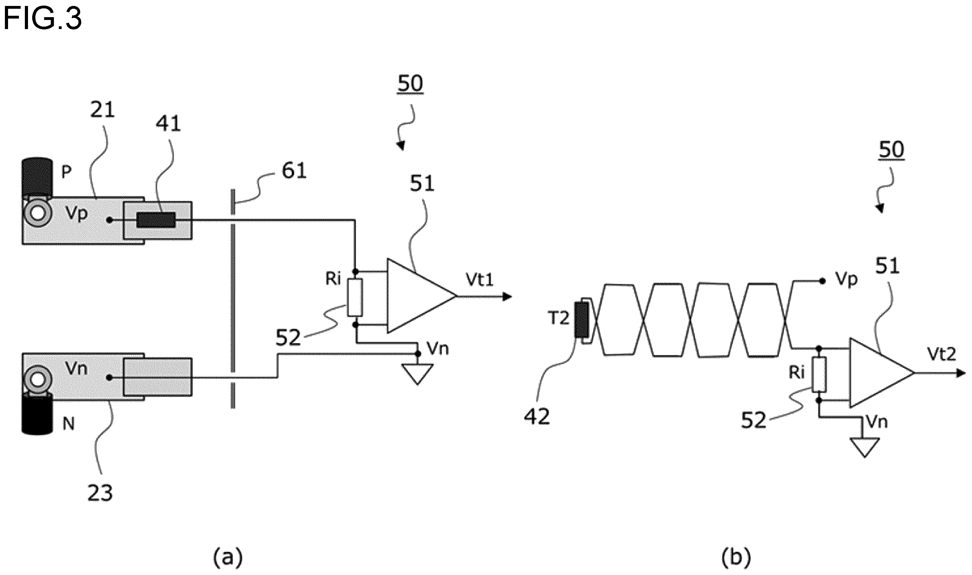

The connection part between the temperature detection units 41, 42 and the cell state monitoring circuit will be described with reference to FIG. 3. FIG. 3(a) is a schematic diagram showing the tab pull-out parts of the battery cell 10 and a part of the cell state monitoring circuit 50. FIG. 3(b) is a schematic diagram showing the temperature detection unit 42 and a part of the cell state monitoring circuit 50. As shown in FIG. 3(a), the temperature detection unit 41 has a thermistor connected to the bus bar 21. One end of the thermistor is directly connected to the bus bar 21, and the other end is connected to an amplifier 51 and a detection resistor 52 included in the cell state monitoring circuit 50. The cell state monitoring circuit 50 has the amplifier (amp) 51 and the detection resistor 52 connected to the temperature detection unit (thermistor) 41. The amplifier 51 is a circuit that amplifies the value of the detection temperature of the temperature detection unit 41, and the detection resistor 52 is connected between the input terminals of the amplifier 51. The detection resistor 52 is connected in series to the temperature detection unit 41 via a signal line. The other end of the detection resistor 52 (the end opposite to the end connected to the temperature detection unit 41) is grounded while being connected to the negative electrode bus bar 23 via a signal line. The temperature detection unit 41 and the cell state monitoring circuit 50 are shielded from each other by a magnetic shield 61.

As shown in FIG. 3(b), the temperature detection unit 42 has a thermistor, one end of which is connected to the amplifier 51 and the detection resistor 52 included in the cell state monitoring circuit 50, and the other end of which is connected to a power source (Vp). The cell state monitoring circuit 50 includes the amplifier (amp) 51 and the detection resistor 52 connected to the temperature detection unit (thermistor) 42. The configuration and connection form of the amplifier 51 and the detection resistor 52 are the same as those shown in FIG. 3(a), but the other end of the detection resistor 52 shown in FIG. 3(b) is grounded without being not connected to a bus bar or the like, which is different from that in FIG. 3(a). In the example of FIG. 3(b), since the temperature detection unit 42 cannot be connected to the positive electrode, an external power supply is used. At that time, the wire connecting the temperature detection unit 42 and the power supply and the wire connecting the temperature detection unit 42 and the cell state monitoring circuit 50 constitute a twisted wire (twisted pair). The number of twists in the twisted wire (twisted pair) is desirably an odd number in order to produce the effect of cancelling out the interlinkage magnetic flux. Although the number of twists in an electric wire is ambiguously set, setting the number of twists is always effective when a fixed pattern can be formed on a printed circuit board.

An input voltage ($V_p$) of the temperature detection unit 41 is the voltage of the positive electrode bus bar 21 in the example of FIG. 3(a), and an input voltage ($V_p$) of the temperature detection unit 42 is the power supply voltage in the example of FIG. 3(b). When the resistance of the thermistor included in the temperature detection units 41 and 42 is designated as $R_{tx}$ and the resistance of the detection resistor 52 is designated as $R_i$, the thermistor resistance $R_{tx}$ can be calculated from a current ($I_{tx}$) flowing through the detection resistor 52 and a potential difference ($V_{tx}$) of the detection resistor 52 using formulas (2) to (4) below. In the following formulas, x is the sensor number (1 or 2), where 1 corresponds to the temperature detection unit 41, and 2 corresponds to the temperature detection unit 42. [Math 2]

$$I_{tx} = \frac{V_p}{(R_{tx}+R_i)} \qquad\qquad (2)$$

[Math 3]

$$V_{tx} = I_{tx} * R_i \qquad\qquad (3)$$

[Math 4]

$$R_{tx} = \left(\frac{V_p - V_{tx}}{I_{tx}}\right) \qquad\qquad (4)$$

Then, the temperatures (Tx) detected by the temperature detection units 41 and 42 are calculated by the following equation (5) below using temperature characteristic approximation coefficients a, b, and c of the thermistors included in the temperature detection units 41 and 42 (temperature characteristic approximation coefficients of the temperature sensors):

[Math 5]

$$\mathrm{Tx} = a * (\ln(R_{tx}))^2 + b * \ln(R_{tx}) + c \qquad\qquad (5)$$

The cell state monitoring circuit 50 calculates the temperatures (Tx) detected by the temperature detection units 41 and 42 using the above equation based on the output of the amplifier 51, and calculates the temperature of the battery cell 10 by taking the average of the calculated detection temperatures (Tx). In this manner, the signal line between the temperature detection unit 41 and the cell state monitoring circuit 50 can be one wire on each of the positive and negative sides. That is, when the operating power supply (current supply) of the temperature detection unit 41 is taken from the positive electrode bus bar 21, the output signal (current) flows through the signal line in the order of the positive electrode bus bar 21, the temperature detection unit 41, the detection resistor 52, the circuit GND, and the negative electrode bus bar 23, and then returns to the battery cell 10. The detection signal is then transmitted as a current to the detection resistor 52, and the potential difference across the detection resistor is output from the amplifier 51 as temperature information. This requires only one signal line from the temperature detection unit 41, which makes it possible to reduce costs and decrease an induced electromotive force due to the interlinkage of magnetic flux generated by a cell charging/discharging current or an impedance measurement current.

In the case of using a plurality of signal lines for connection, a closed circuit is formed unlike in the connection form shown in FIG. 3(a). When a current is conducted for charging/discharging or impedance measurement, magnetic flux generated by the current passes through the closed circuit to generate an induced electromotive force, which may cause noise. In the present embodiment, since a single wire is used, such noise can be prevented and the temperature detection accuracy of the battery cell can be increased. In addition, in the case of connecting the temperature detection unit 42 with two signal lines as shown in FIG. 3(b), there are influences of not only self-inductance but also mutual inductance of the signal lines, whereas in the case of using only one signal line as shown in FIG. 3(a), it can be considered that only the self-inductance has an influence so that the influence of mutual induction can be ignored. The self-inductance (inductance of a conductor or inductance created by a current loop in a closed circuit) can be calculated from the design value of each wire using a general formula for inductance in a transmission line or a general formula for coil inductance, and the mutual inductance can also be calculated from a general approximation formula. Looking more strictly at the whole system, even when connected with one signal line, the return path of the output current (return current) of the temperature detection unit 41 appears to be the same as when connected with two signal lines in the entire cell state monitoring circuit 50 taking into account not only the amplifier 51 but also the circuit power supply GND. However, since part of the return path shields the cell state monitoring circuit 50 by a magnetic shield, the area of magnetic flux interlinkage can be reduced.

In the configuration of FIG. 3(a), a capacitor $C_i$ may be connected between the wire that connects the temperature detection unit 41 and the detection resistor 52 and the wire that connects the negative electrode bus bar 23 and the detection resistor 52. That is, adding the capacitor $C_i$ between the signal line and the circuit power supply GND inside the magnetic shield creates a low-pass filter of the time constant of the internal resistance ($R_{t1}$) of the temperature detection unit 41 and the capacitor $C_i$ ($= R_{t1} \times C_i$). The low-pass filter can function as a high frequency cut filter to attenuate signal amplitudes equal to or higher than the frequency corresponding to the reciprocal of the time constant.

As shown in FIG. 3(b), the temperature detection unit 42 is connected to the cell state monitoring circuit 50 by two signal lines, and the wires are twisted. This prevents noise generation due to the influence of an induced electromotive force by using the effect of canceling out the interlinkage magnetic flux.

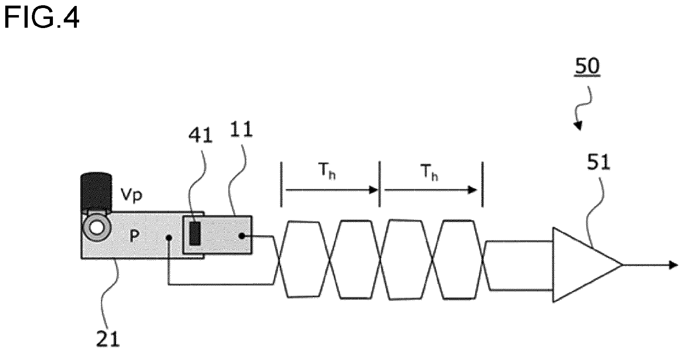

In the present embodiment, the connection between the temperature detection unit 41 and the cell state monitoring circuit 50 may be made in a connection form as shown in FIG. 4, instead of the connection form shown in FIG. 3(a). FIG. 4 is a schematic diagram showing a tab pull-out part of a battery cell 10 and a part of a cell state monitoring circuit 50 in a modified example of the present embodiment. The cell state monitoring circuit 50 has an amplifier 51 connected to a temperature detection unit (thermistor) 41. One of the input terminals of the amplifier 51 is connected to the temperature detection unit 41, and the temperature detection unit 41 is provided on a positive electrode tab 11. The other of the input terminals of the amplifier 51 is connected to a positive electrode bus bar 21. A twisted wire (twisted pair) is formed between the wire that connects the temperature detection unit 41 and the cell state monitoring circuit 50 and the wire that connects the positive electrode bus bar 21 and the cell state monitoring circuit 50. In this case, in order to achieve the effect of canceling out the interlinkage magnetic flux, the number of twists in the twisted wire (twisted pair) is odd.

Since the junction of one of the wires is on the copper bus bar 21 and the junction of the other wire is on the copper-nickel plated positive electrode tab 11, a thermoelectromotive force (Seebeck effect) is generated by the junction of the dissimilar metals, and the electromotive force becomes a thermoelectromotive force (voltage) according to the junction temperature. In a connection mode as shown in FIG. 4, the cell state monitoring circuit 50 can also calculate the temperature near the tab from the thermoelectromotive force. This calculation method uses the principle of a thermocouple and can be implemented because the junction of the copper of the positive electrode bus bar and the junction of the nickel-copper alloy of the tab are similar to the configuration of a T-type thermocouple.

The thermoelectromotive force can be expressed by the following formula (6) where $V_{t1}$ is the output voltage of the amplifier 51, $S_a$ is the Seebeck coefficient of the bus bar 21, $S_b$ is the Seebeck coefficient of the positive electrode tab 11, $T_s$ is the temperature of the measurement target (the temperature of the tab in the example of FIG. 4), and $T_c$ is the temperature (reference temperature) of the connection point on the board on which the cell state monitoring circuit 50 is mounted:

[Math 6]

$$V_{t1} = (S_a - S_b) * (T_s - T_c) \qquad (6)$$

The cell state monitoring circuit 50 can calculate the temperature near the tab of the battery cell 10 using the above formula (6) based on the output of the temperature detection unit 41. In the calculation using the above formula (6), the reference temperature ($T_c$) is required, but the temperature of the circuit board (more precisely, the connection point between the cell state monitoring circuit 50 and the board) can be used as a substitute.

Since the thermoelectromotive force is as weak as several $\mu$A/°C, if two signal lines are used, the interlinkage of the magnetic flux will be generated by the charging/discharging current and the impedance measurement current under the influence of the self-inductance effect and the mutual inductance. In the example of FIG. 4, the signal lines are connected as a twisted wire (twisted pair) to the amplifier 51 as in the example of FIG. 3(b). Due to the use of the twisted wire, the positions of the two adjacent signal loops interchange with each other (180 degrees) (interchange in a cycle Th in FIG. 4). When the magnetic flux crosses from one direction with respect to the loop, an induced current flows in the adjacent signal loop of the twisted wire in a direction that prevents the magnetic flux change. However, since the current directions interchange by 180 degrees at the adjacent position, the composite value becomes zero due to mutual cancellation. Therefore, in order to obtain this canceling effect, it is recommended that the number of signal loops of the interlinkage magnetic flux be an even number and the number of twisting points be an odd number. In the example of FIG. 4, the temperature detection unit 41 is connected to the positive electrode tab 11. Alternatively, the temperature detection unit 41 may be connected to the negative electrode tab 13, one of the input terminals of the amplifier 51 may be connected to the temperature detection unit 41, and the other input terminal of the amplifier 51 may be connected to the negative electrode bus bar 23.

Although the cell state monitoring circuit 50 calculates the temperature of the battery cell 10 in the manner described above, the cell state monitoring circuit 50 may perform output correction based on Joule heat in order to further increase the detection accuracy of the temperature around the tab. The correction method will be described below. The cell state monitoring circuit 50 has a calculation circuit that calculates the Joule heat of the bus bar 20. The large-capacity battery module 1A is configured by connecting a plurality of battery cells 10 each having a plurality of laminated positive and negative electrode layers and electrolytes (separators) inside the module. Therefore, when the battery module 1A is electrically charged, the charging/discharging current is concentrated near the tab connecting the plurality of battery cells 10, and the concentrated current flows to the output terminal 30 via the tab. Since such current flows in a concentrated manner, heat (Joule heat) is generated due to the electrical resistance of the tab 11 or 13 and/or the bus bar 20. The tabs and the positive and negative electrodes are joined together by ultrasonic welding or the like, and the electrical resistance at the joining points also becomes a heat generating element.

When the resistance of the tab 11 or 13 and/or the bus bar 20 is designated $R_b$, the bus bar temperature ($T_b$) corresponding to Joule heat can be expressed by the following formula (7) where I is the charging/discharging current, t(s) is the power distribution time, m is the mass of the tab and/or bus bar, and $C_v$ is the specific heat:
[Math 7]

$$T_b = I^2 * R_b * t \; (s) \; / \; (C_v * m) \qquad (7)$$

In the formula (7), the charging/discharging current I is a variable that is determined according to the charging conditions of the battery cell, and can be obtained from a current sensor. Time t can be measured by the controller 100 or the timer function of the microcomputer in the cell state monitoring circuit 50. The other values are design values. Therefore, the heat generation temperature of the bus bar 20 can be calculated using the above formula (7). The cell state monitoring circuit 50 can calculate the temperature (corrected temperature) near the tab, excluding Joule heat, by subtracting the temperature ($T_b$) calculated by the formula (7) from the detection temperature of the temperature detection unit 41. This corrected temperature, excluding the heat generation temperature due to Joule heat, is closer to the internal temperature of the cell, and the average value of the detection temperature of the temperature detection unit 42, which corresponds to the surface temperature of the cell, and the corrected temperature is closer to the internal temperature of the battery cell 10.

As described above, the battery module 1A of the present embodiment includes the battery cell 10, the plurality of temperature detection units 41 and 42, and the cell state monitoring circuit 50. The temperature detection unit 41 is provided at a first installation point on the tab 11 or 13 or on the bus bar 20, and the temperature detection unit 42 is provided at a second installation point on the outer surface of the battery cell 10. The second installation point is located at a position farthest from the tabs 11 and 13 on the outer surface of the cell. The cell state monitoring circuit 50 calculates the temperature of the battery cell 10 based on the outputs of the plurality of temperature detection units 41 and 42. This makes it possible to calculate the internal temperature of the battery cell 10 by a value close to the actual temperature. Furthermore, using the result of calculation by the cell state monitoring circuit 50 as data necessary for estimating the battery state, such as the degree of deterioration of the battery, allows the calculation result to be closer to the actual state of the battery.

In the present embodiment, the battery module 1A is configured such that the second installation point is located at a position where the temperature of the second installation point is the lowest when the temperature of the first installation point is the highest in the temperature gradient of the battery cell in the direction along the lamination plane of the electrode layers. This makes it possible to calculate the internal temperature of the battery cell 10 by a value close to the actual temperature.

In the present embodiment, the cell state monitoring circuit 50 calculates the average value of the detection value of the temperature detection unit 41 and the detection value of the temperature detection unit 42 as the temperature of the battery cell 10. This makes it possible to easily determine a value close to the actual internal temperature of the battery cell 10 without performing complex model calculations. Since the calculation load of the cell state monitoring circuit 50 is light, inexpensive calculation elements can be used. Furthermore, using the result of calculation by the cell state monitoring circuit 50 as data necessary for estimating the battery state, such as the degree of deterioration of the battery, allows the calculation result to be closer to the actual state of the battery.

In the present embodiment, the temperature detection units 41 and 42 include sensors has a property in which electrical resistance changes depending on the temperature. Since thermistors are inexpensive and robust temperature sensors, they can realize inexpensive and highly reliable temperature measurement.

In the present embodiment, the cell state monitoring circuit 50 has the amplifier 51 electrically connected to the temperature detection units (thermistors) 41 and 42, and the detection resistor 52, and calculates the temperature of the battery cell 10 based on the output of the amplifier 51. This saves on wiring material used for joining the temperature detection units 41 and 42 to the tab 11 or 13 or the bus bar 20, and also reduces the influence of inductive noise, thereby making it possible to produce a cell module at low cost. This maintains temperature detection accuracy, so that the effect of an appropriate temperature correction in the cell state monitoring circuit at the subsequent stage can be expected.

In the present embodiment, the bus bar 20 is formed of copper, and the temperature detection unit 41 is provided on the bus bar 20. Accordingly, the temperature change in the battery cell 10 can be measured with high response. As a result, it is possible to detect the prediction of the temperature reaching the upper limit at an early stage, and to improve the control performance in suppressing the charging/discharging current to the upper limit.

In the present embodiment, the cell state monitoring circuit 50 calculates the temperature of the battery cell 10 based on the electromotive force at the junctions between the tabs 11 and 13 and the bus bar 20. This simplifies the temperature detection unit 41 and the cell state monitoring circuit 50, so that the cell module can be manufactured at low cost.

In the present embodiment, the cell state monitoring circuit 50 calculates the Joule heat in the bus bar 20 based on the charging/discharging current of the battery cell 10, and calculates the temperature of the battery cell 10 based on the calculated Joule heat and the outputs of the temperature detection units 41 and 42. This makes it possible to obtain a value closer to the internal temperature of the battery cell to be originally determined by subtracting the amount of heat generated by the tab 11 or 13 and/or the bus bar 20 from the detection value of the temperature detection unit 41. Using the result of calculation by the cell state monitoring circuit 50 as data necessary for estimating the battery state, such as the degree of deterioration of the battery, makes it possible to bring the calculation result closer to the actual state of the battery.

In the present embodiment, the cell state monitoring circuit 50 measures the degree of deterioration of the battery cell 10 based on the calculated temperature of the battery cell 10. Accordingly, it can be expected that the accuracy of estimating the capacity retention rate (SOH) of the battery cell 10 will be improved. This also improves the accuracies of life prediction and residual performance classification at the time of secondary use, which will contribute to improving the utilization efficiency of the module and reducing the total cost of the cells.

The high frequency resistance of the battery cell 10 is known as an index that is highly correlated with the capacity retention rate. However, the high frequency resistance is mainly expressed by the real axis component (HFR) of the complex impedance value at approximately 1 kHz or higher (preferably 10 kHz or higher). This HFR suggests the growth of SEI that is a factor in decreasing the storage capacity of the battery cell 10. Since HFR has temperature dependence, the accuracy of HFR can be improved by making a temperature correction at the estimation of SOH. The cell state monitoring circuit 50 has an HFR-cell temperature table that shows the correlation between the temperature of the battery cell 10 and HFR. The table represents the correlation between a coefficient obtained by normalizing the HFR natural logarithm and the reciprocal of the temperature of the battery cell 10, for example. The coefficient obtained by normalizing the HFR natural logarithm is $Ln[1/HFR]/Ln[1/HFR(25)]$, where $1/HFR$ is the natural logarithm of the reciprocal (Siemens) of HFR, and $HFR(25)$ is HFR at a standard temperature (25°C). The cell state monitoring circuit 50 also has an HFR-SOH table that shows the correlation between HFR and SOH at the standard temperature (25°C). The correlations shown in the HFR-cell temperature table and the HFR-SOH table are represented by linear characteristics or nonlinear characteristics. The cell state monitoring circuit 50 refers to the HFR-cell temperature table, reads the HFR temperature correction coefficient at the current temperature based on the temperature of the battery cell calculated in the above-described manner, and converts the same into HFR at the standard temperature (25°C). Thereafter, the cell state monitoring circuit 50 refers to the HFR-SOH table and estimates SOH at the standard temperature. The cell state monitoring circuit 50 outputs the estimation result to the controller 100. The controller 100 may output the capacity retention rate (SOH) in response to a read command from a service factory or a battery reuse/recycle factory. The estimation accuracy of the capacity retention rate (SOH) determined in this manner is improved by using a value closer to the actual internal temperature of the cell.

As a modified example of the present embodiment, the controller 100 may calculate the temperature of the battery cell 10 by simultaneously sampling and averaging the temperature signals at the same sampling time Ts as that of the measurement current for impedance measurement. The signals including the detection values of the temperature detection units 41 and 42 (hereinafter also referred to as temperature signals) include induced current noise corresponding to the frequency of the measurement current for impedance measurement. As a result, the voltage of the temperature signal obtained is a voltage signal that alternates on the time axis around the voltage ($V_{tx}$) corresponding to the detection value of the temperature detection unit, so that the voltage waveform of the temperature signal is a sinusoidal wave that varies between the maximum value ($V_{tx} + V_e$) and the minimum value ($V_{tx} - V_e$). Therefore, the voltage of the temperature signal fluctuates and may be high or low depending on the sampling timing.

If averaging is performed over a time that is sufficiently long with respect to the noise period, the fluctuation is reduced, and the voltage of the temperature signal becomes equal to the average of the detection values of the temperature detection units 41 and 42. However, since an extremely low frequency of 1 Hz or less may be measured in the impedance measurement, the actual temperature changes are also averaged, so that there is a risk of detecting an incorrect temperature. Therefore, in the modified example, temperature signals are simultaneously sampled and averaged at the same sample time Ts as that of the measurement current for impedance measurement, so that the induced noise can be removed by the averaging regardless of the impedance measurement frequency. In particular, when the impedance measurement period is short (N = 1 to 100), it is desirable to set the period of the measurement current to an integer. This is because noise components that do not last for one period remain as remainders in the average calculation, resulting in an error. If N is sufficiently large, it can be ignored.

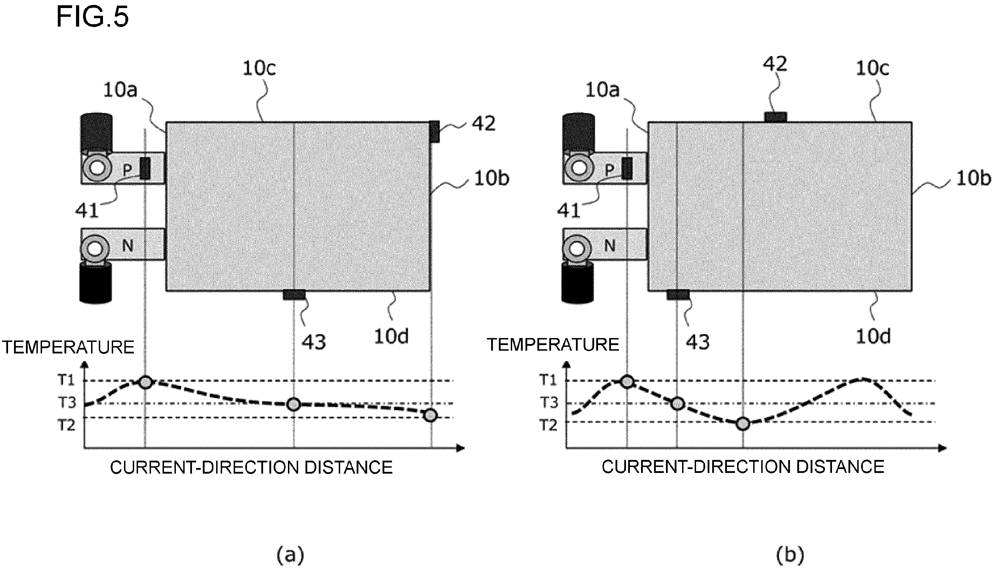

In the modified example of the present embodiment, as shown in FIG. 5(a), the temperature detection unit 42 is provided at one end of the opposing side 10b (the corner of the outer surface of the battery cell 10) in the direction along the opposing side 10b, and a temperature detection unit 43 is provided near the middle of the long side 10d. That is, in the modified example, there are a total of three temperature detection units 41 to 43. The temperature distribution at the end on the opposite side 10b has a property in which the temperature is the highest in and near the middle and becomes lower toward the edge portion (the corner of the outer surface of the battery cell 10). This property can be obtained in advance by experiment or numerical analysis. The installation point of the temperature detection unit 43 is provided on a side surface of the battery cell 10 between the temperature detection unit 41 and the temperature detection unit 42. If the difference between the detection temperature ($T_2$) of the temperature detection unit 42 and the detection temperature ($T_3$) of the temperature detection unit 43 is small, the temperature distribution of the internal temperature of the battery cell 10 is flat, and the detection temperature ($T_1$) of the temperature detection unit 41 is only high, and the internal temperature of the battery cell 10 is close to the detection temperature ($T_3$) of the temperature detection unit 43. The slope of the temperature gradient between the temperature detection unit 41 and the temperature detection unit 43 is estimated by extrapolation up to the tabs 11 and 13 using the temperature differences ($\Delta T_{13} = T_1 - T_3$, $\Delta T_{32} = T_3 - T_2$) and the spacings ($d_1$: the distance between the installation point of the temperature detection unit 41 and the installation point of the temperature detection 43, $d_2$: the distance between the installation point of the temperature detection unit 43 and the installation point of the temperature detection unit 42). The estimated value is interpreted as the difference between the internal temperature and the surface (external) temperature, and the value obtained by adding the difference to the detection temperature ($T_3$) is equivalent to a tab temperature $T_{e1}$. Then, the difference between the tab temperature $T_{e1}$ and the actually measured detection temperature ($T_1$) is calculated as the internal temperature of the battery cell 10.

As described above, in the battery module 1A according to the modified example, the temperature detection unit 42 is located on, among the sides surrounding the rectangular outer surface of the cell, the opposite side 10b that is opposite to the pull-out side 10a located on the pull-out side of the tabs 11 and 13, at the position at the lowest temperature in the temperature gradient in the direction along the opposite side 10b. Accordingly, the internal temperature of the battery cell 10 can be determined by a value closer to the actual state. In addition, using the result of calculation by the cell state monitoring circuit 50 as data necessary for estimating the battery state, such as the degree of deterioration of the battery, makes it possible to bring the calculation result closer to the actual state of the battery.

In the battery module 1A according to the modified example, the temperature detection unit 43 (corresponding to the "third temperature detection unit" of the present invention) is provided on, among the sides surrounding the outer surface of the battery cell 10, the sides 10c and 10d that are different from the pull-out side 10a and the opposite side 10b. The cell state monitoring circuit 50 calculates the temperature of the battery cell 10 based on the outputs (detection temperatures: $T_1$, $T_2$, and $T_3$) of the temperature detection units 41 to 43. This makes it possible to determine the internal temperature of the battery cell 10 by a value closer to the actual state.

As another modified example, as shown in FIG. 5(b), the temperature detection unit 42 is provided near the middle of the long side 10c, the temperature detection unit 43 is provided on the long side 10d, and the installation point of the temperature detection unit 43 is located between the installation point of the temperature detection unit 41 and the installation point of the temperature detection unit 42 in the current conduction direction. As shown in FIG. 5(b), the slope of the temperature distribution of the detection temperatures ($T_1$, $T_2$, and $T_3$) of the temperature detection units 41 to 43 is symmetrical at the intermediate point between the positive and negative electrodes of the cell. That is, providing the temperature detection unit 43 makes it possible to estimate the temperature distribution as shown in FIG. 5(b). The cell state monitoring circuit 50 can calculate the internal temperature of the battery cell 10 by performing complementary calculations on the temperatures between the detection temperatures ($T_1$, $T_2$, and $T_3$) according to a heat transfer equation or the like. Further, the cell state monitoring circuit 50 inputs the calculation result as temperature information to the internal electrochemical characteristic model of the battery cell 10, thereby enabling precise internal state estimation calculation. At this time, the measurement point (position) of the detection temperature ($T_3$) is set in the temperature gradient characteristic between the temperature ($T_2$) and the temperature ($T_1$) determined in advance by experiment or numerical analysis, at a place where an inflection point (second-order differential value) is large. If no inflection point is found, the measurement point is set at an intermediate point between the temperature detection unit 41 and the temperature detection unit 42 as a convenience.

As a modified example of the present embodiment, the controller 100 may control charging/ discharging of the battery cell 10 based on the highest temperature among the temperatures detected by the plurality of temperature detection units 41 to 43. The outputs of the plurality of temperature detection units 41 to 43 have a temperature gradient due to the ambient temperature of the battery cell 10, the heat capacity of each member, and the rising current of the charging/discharging current. The cell state monitoring circuit 50 outputs the highest detection voltage among the detection values of the plurality of temperature detection units 41 to 43 to the controller 100 as a representative temperature. The controller 100 determines whether the representative temperature has reached the upper limit temperature determined by the cell module. If the upper limit temperature has been reached, the controller 100 controls the charging circuit or the like to reduce the amount of charging/discharging current. As for the control of the amount of current, in the case of powering the drive motor, the controller 100 reduces the driving output, and if the battery is under regeneration, the controller 100 stops regeneration of the battery and distributes the power to other loads, for example. If rapid charging is in progress, the controller 100 restricts the operation of the charger by issuing a command to decrease the charging rate. This makes it possible to avoid the battery cell from exceeding the upper limit temperature.

Although the embodiments of the present invention have been described above, these embodiments have been described in order to facilitate understanding of the present invention, not in order to limit the present invention. Therefore, each element disclosed in the above embodiments is intended to include all design changes and equivalents that fall within the technical scope of the present invention.

Description of Reference Numerals

1A Battery module
10 Battery cell
10a, 10b Short side
10c, 10d Long side
11 Positive electrode tab
13 Negative electrode tab
20 Bus bar
30 Output terminal
41 to 43 Temperature detection unit
50 Cell state monitoring circuit
90 Module cover
100 Controller

**Claims**

1. A battery module comprising:

   a battery cell that has a plurality of electrode layers and a tab and is connected to a plurality of output terminals;
   a plurality of temperature detection units configured to detect a temperature of the battery cell; and
   a cell state monitoring circuit configured to monitor a state of the battery cell, wherein
   one temperature detection unit out of the plurality of temperature detection units is provided at a first installation point on the tab connected to the output terminal or on a bus bar connected to the tab,
   another temperature detection unit out of the plurality of temperature detection units is provided at a second installation point on an outer surface of the battery cell,
   the second installation point is located at a position farthest from the tab on the outer surface of the cell, and
   the cell state monitoring circuit calculates the temperature of the battery cell based on outputs of the plurality of temperature detection units.

2. The battery module according to claim 1, wherein the second installation point is located at a position where, in a temperature gradient of the battery cell in a direction along a lamination plane of the plurality of electrode layers, a temperature of the second installation point is lowest when a temperature of the first installation point is highest.

3. The battery module according to claim 1 or 2, wherein the cell state monitoring circuit calculates an average value of a detection value of the one temperature detection unit and a detection value of the other temperature detection unit as the temperature of the battery cell.

4. The battery module according to any one of claims 1 to 3, wherein the plurality of temperature detection units have a sensor having a property in which electrical resistance varies depending on temperature.

5. The battery module according to any one of claims 1 to 4, wherein

   the one temperature detection unit has a thermistor connected to the bus bar, and
   the cell state monitoring circuit has an amplifier connected to the thermistor and a detection resistor connected to the amplifier, and calculates the temperature of the battery cell based on an output of the amplifier.

6. The battery module according to any one of claims 1 to 5, wherein

   the bus bar is formed of copper, and
   the one temperature detection unit is provided on the bus bar.

7. The battery module according to any one of claims 1 to 6, wherein the cell state monitoring circuit calculates the temperature of the battery cell based on an electromotive force at a junction where the tab and the bus bar are joined together.

8. The battery module according to any one of claims 1 to 7, wherein the other temperature detection unit is provided on, among sides surrounding the rectangular outer surface of the cell, an opposite side that is opposite to a pull-out side located on a pull-out side of the tab, at a position at a lowest temperature in the temperature gradient in a direction along the opposite side.

9. The battery module according to any one of claims 1 to 8, wherein

the plurality of temperature detection units includes the one temperature detection unit as a first temperature detection unit, the other temperature detection unit as a second temperature detection unit, and a third temperature detection unit,
the second temperature detection unit is provided on, among the sides surrounding the rectangular outer surface of the cell, the opposite side that is opposite to the pull-out side located on the pull-out side of the tab,
the third temperature detection unit is provided on, among the sides surrounding the rectangular outer surface of the cell, a side that is different from the pull-out side and the opposite side, and
the cell state monitoring circuit calculates the temperature of the battery cell based on outputs of the first temperature detection unit, the second temperature detection unit, and the third temperature detection unit.

10. The battery module according to any one of claims 1 to 9, wherein

the cell state monitoring circuit calculates Joule heat in the bus bar based on a charging/discharging current of the battery cell, and
the cell state monitoring circuit calculates the temperature of the battery cell based on the calculated Joule heat and the outputs of the plurality of temperature detection units.

11. The battery module according to any one of claims 1 to 10, wherein the cell state monitoring circuit measures a degree of deterioration of the battery cell based on the calculated temperature of the battery cell.

12. A charging/discharging control device that controls charging/discharging of the battery module according to any one of claims 1 to 11, wherein the charging/discharging control device comprises a controller configured to control charging/discharging of the battery cell based on a highest temperature among the temperatures detected by the plurality of temperature detection units.

FIG.1

CONTROLLER(100)

1A

90

92
93

31
32
33
30

91

(a)

10b
10
42

50

11
41
21
13
22
23
10a

20 { 21
22
23

(b)

EP 4 471 933 A1

15

FIG.2

21  10a        10c        10b

41              P    42

23

IPERATURE  23

T1
Tc
T2

CURRENT-DIRECTION DISTANCE

(a)

21  10a    10c    42    10b    23

41              P

TEMPERATURE        10d

T1
Tc
T2

CURRENT-DIRECTION DISTANCE

(b)

EP 4 471 933 A1

FIG.3

(a)

(b)

EP 4 471 933 A1

FIG.4

# FIG.5

TEMPERATURE

T1
T3
T2

CURRENT-DIRECTION DISTANCE

(a)

TEMPERATURE

T1
T3
T2

CURRENT-DIRECTION DISTANCE

(b)

EP 4 471 933 A1

<table>
<tr><td align="center">**INTERNATIONAL SEARCH REPORT**</td><td>International application No.<br><br>**PCT/IB2023/000015**</td></tr>
</table>

**A. CLASSIFICATION OF SUBJECT MATTER**

*H01M 10/48*(2006.01)i; *H01M 50/204*(2021.01)i; *H01M 50/507*(2021.01)i; *H01M 50/522*(2021.01)i; *H01M 50/569*(2021.01)i; *H02J 7/04*(2006.01)i; *H02J 7/10*(2006.01)i

FI: H01M10/48 301; H01M10/48 P; H01M50/204 401D; H01M50/507; H01M50/522; H01M50/569; H02J7/04 L; H02J7/10 L

According to International Patent Classification (IPC) or to both national classification and IPC

**B. FIELDS SEARCHED**

Minimum documentation searched (classification system followed by classification symbols)

H01M10/48; H01M50/204; H01M50/507; H01M50/522; H01M50/569; H02J7/04; H02J7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-526129 A (GUANG DONG OPPO MOBILE TELECOMM CORP LTD) 07 September 2017 (2017-09-07)<br>entire text, all drawings | 1-12 |
| A | CN 113219342 A (JIANGSU UNIVERSITY) 06 August 2021 (2021-08-06)<br>entire text, all drawings | 1-12 |
| A | JP 2019-029062 A (TOYOTA MOTOR CORP) 21 February 2019 (2019-02-21)<br>entire text, all drawings | 1-12 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 2017-526129 | A | 07 September 2017 | US | 2017/0179547 | A1 | |
| | | | | entire text, all drawings | | | |
| | | | | WO | 2016/155447 | A1 | |
| | | | | EP | 3276776 | A1 | |
| | | | | CN | 104953642 | A | |
| | | | | KR | 10-2017-0033356 | A | |
| CN | 113219342 | A | 06 August 2021 | (Family: none) | | | |
| JP | 2019-029062 | A | 21 February 2019 | (Family: none) | | | |

Form PCT/ISA/210 (patent family annex) (January 2015)

**EP 4 471 933 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022011013 A

- JP 2020534653 A